# EUROPÄISCHE PATENTSCHRIFT

(11) **EP 1 229 260 B1**
(45) Veröffentlichungstag und Bekanntmachung des Hinweises auf die Patenterteilung: **30.03.2005**
(21) Anmeldenummer: 02002481.6
(22) Anmeldetag: 01.02.2002
(51) Int. Cl.: F16C 33/50, F16C 33/38

(54) **Wälzkörperkette**
Rolling element string
Chaîne d'éléments de roulement

(30) Priorität: 01.02.2001 DE 20101760 U
(43) Veröffentlichungstag der Anmeldung: 07.08.2002
(73) Patentinhaber: Rexroth Star GmbH, 97424 Schweinfurt (DE)
(72) Erfinder: Blaurock, Günter, 97464 Niederwerrn (DE); Schlereth, Rudolf, 97705 Frauenroth (DE); Stender, Hans-Georg, 97456 Hambach (DE)
(74) Vertreter: Herzog, Markus, Dipl.-Phys. Dr.

(56) Entgegenhaltungen:
- DE-A- 19 824 250
- GB-A- 121 909
- GB-A- 1 026 080
- US-A- 5 156 462
- PATENT ABSTRACTS OF JAPAN Bd. 1998, Nr. 09, 31. Juli 1998 (1998-07-31) -& JP 10 089358 A (THK KK), 7. April 1998 (1998-04-07)

## Beschreibung

Die Erfindung betrifft eine Wälzkörperkette, umfassend:
- eine Mehrzahl von in dichter Aufeinanderfolge angeordneten Wälzkörpern und
- ein längliches Trägerband mit
   - einer Mehrzahl von Ausnehmungen zur Aufnahme der Wälzkörper,
   - einer Mehrzahl von Halteelementen zum Halten der in den Ausnehmungen aufgenommenen Wälzkörper,
      wobei jedem Wälzkörper wenigstens ein Halteelement zugeordnet ist, und
   - wenigstens einem länglichen flexiblen Element zum Verbinden der Halteelemente.

Eine derartige Wälzkörperkette ist beispielsweise aus der DE 198 24 250 A1 bekannt.

Aus der japanischen Patent-Offenlegungsschrift 5-52217 (1993) zu der japanischen Patentanmeldung 3-235563 (1991) ist eine Wälzkörperkette bekannt, die eine Mehrzahl von Kugeln umfasst, welche in Ausnehmungen eines Trägerbands angeordnet sind. Zwischen jeweils zwei aufeinanderfolgenden Kugeln ist ein Halteelement angeordnet, das auf seinen in Längsrichtung des Trägerbands vorauslaufenden bzw. nachlaufenden Seiten jeweils eine Haltefläche zum gleitenden Eingriff mit der vorauslaufenden bzw. nachlaufenden Kugel aufweist. Die Halteelemente sind mittels zweier flexibler Streifenelemente untereinander verbunden und bilden mit diesen zusammen das Trägerband.

Die bekannte Kugelkette hat den Vorteil, dass die Kugeln in dichter Aufeinanderfolge, d.h. mit geringem Abstand voneinander angeordnet sein können. Dabei beträgt das Verhältnis des Kugeldurchmessers zum Abstand der Mittelpunkte zweier benachbarter Kugeln annähernd 1 : 1. Aufgrund der hieraus resultierenden hohen Kugeldichte weist die bekannte Kugelkette eine hohe Belastbarkeit bzw. Lasttragefähigkeit auf. Nachteilig ist jedoch die Versteifung des Trägerbands, die mit der Befestigung der beiden Streifenelemente an den Halteelementen im Bereich zwischen zwei aufeinanderfolgenden Kugeln einhergeht. Auf ein Verbiegen des Trägerbands um eine zur Querrichtung des Trägerbands parallel verlaufende Achse, beispielsweise in den Umlenkabschnitten der Laufbahn eines Linearlagers, können die Streifenelemente des Trägerbands lediglich im Bereich ihrer seitlichen Anlage an den Kugeln reagieren, nicht jedoch im Bereich ihrer seitlichen Befestigung an den Halteelementen.

Die hieraus folgende relativ starke Verbiegung des Trägerbands im Bereich seiner seitlichen Anlage an den Kugeln führt zu einer entsprechenden, aus der Elastizität des Trägerbandmaterials resultierenden Rückstellkraft des Trägerbands in seine geradlinige Stellung. Aufgrund des Halteeingriffs des Trägerbands mit den Kugeln beeinflusst diese Rückstellkraft die Bewegung der Kugeln in den Umlenkabschnitten der Laufbahn. Die starke Verbiegung des Trägerbands kann bei einem mit der bekannten Wälzkörperkette bestückten Linearlager zu einer stärkeren Geräuschentwicklung, zu einer erhöhten Reibung der Streifenelemente in den Führungsnuten, sowie zu einer Beeinträchtigung der Dauerfestigkeit aufgrund der höheren Biegebeanspruchung führen.

Weitere Kugelketten mit dicht aufeinanderfolgenden Kugeln sind beispielsweise in der US 2,897,021 und der US 3,292,981 offenbart. Auch bei diesen Kugelketten ist zwischen jeweils zwei aufeinanderfolgenden Kugeln ein Halteelement angeordnet, das sowohl eine Haltefläche zum gleitenden Eingriff mit der vorauslaufenden Kugel als auch eine Haltefläche zum gleitenden Eingriff mit der nachlaufenden Kugel aufweist.

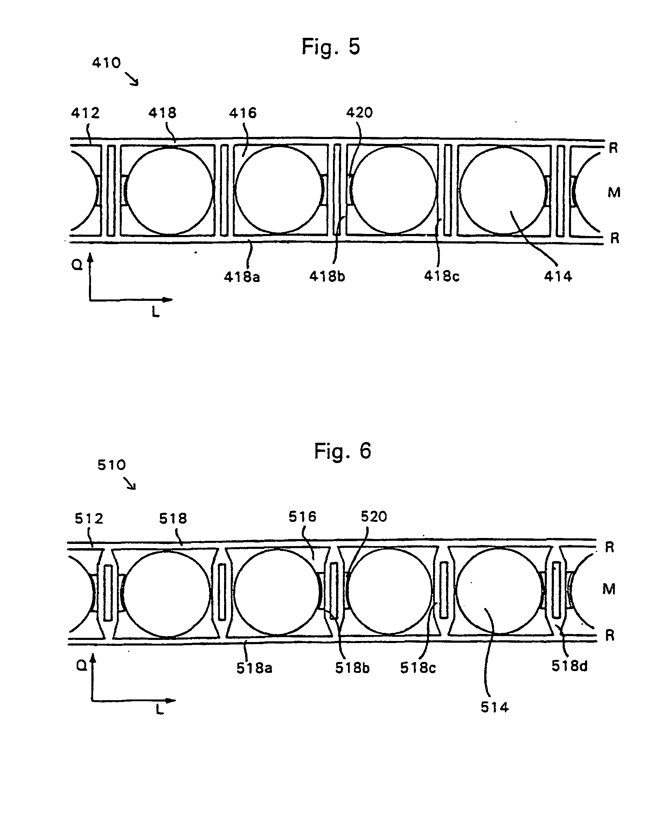

Eine weitere, nicht gattungsgemäße Wälzkörperkette ist aus der japanischen Patent-Offenlegungsschrift 62-242126 (1987) zur japanischen Patentanmeldung 60-253865 (1985) bekannt. Bei den aus den dortigen Figuren 5 und 6 bekannten Wälzkörperketten wird jeder Wälzkörper von zwei ihm und nur ihm zugeordneten Halteelementen gehalten. Somit sind zwischen zwei aufeinanderfolgenden Wälzkörpern zwei körperlich voneinander getrennt ausgebildete Halteelemente vorgesehen, die in einem Mittelabschnitt des Trägerbands in einem vorbestimmten Abstand voneinander angeordnet sind.

Das Trägerband der bekannten Wälzkörperkette hat den Vorteil, dass es nicht nur in den Bereichen seiner seitlichen Anlage an den Wälzkörpern um eine zur Querrichtung parallel verlaufende Achse gebogen werden kann, sondern auch in den Bereichen zwischen zwei aufeinanderfolgenden Wälzkörpern. Durch die verglichen mit der JP-A-5-52217 (1993) doppelte Anzahl von Biegestellen wird bei gleicher Krümmung eines Umlenkabschnitts der Laufbahn das Trägerband an jeder einzelnen Biegestelle weniger verbogen und beeinflusst den Lauf der Wälzkörper in entsprechend geringerem Maße, was eine höhere Laufruhe eines mit der bekannten Wälzkörperkette bestückten Linearlagers zur Folge hat. Die aus der JP-A-62-242126 (1987) bekannte Wälzkörperkette hat jedoch den Nachteil, dass die Wälzkörper in loser Aufeinanderfolge, d.h. mit relativ großem Abstand voneinander angeordnet sind, um den für die gesonderten Halteelemente erforderlichen Raum bereitstellen zu können. Dabei beträgt das Verhältnis des Kugeldurchmessers zum Abstand der Mittelpunkte zweier benachbarter Kugeln etwa 1 : 1,5. Mit der hieraus resultierenden niedrigeren Wälzkörperdichte geht eine entsprechende Minderung der Belastbarkeit der Wälzkörperkette einher.

Aus der DE-PS 835 718 ist eine Wälzkörperkette bekannt, bei welcher der Abstand aufeinanderfolgender Wälzkörper etwa das Doppelte des Wälzkörperdurchmessers beträgt. Gehalten werden die Wälzkörper von zwischen ihnen angeordneten Zungen eines sie tragenden Federstahlbandes. Eine Wälzkörperkette mit ähnlich großem Wälzkörperabstand, d.h. ähnlich loser Aufeinanderfolge der Wälzkörper, ist in der US 2,557,476 offenbart.

Die DE 36 35 261 A1 beschreibt eine Kugelkette mittleren Kugelabstands. D.h. das Verhältnis des Kugeldurchmessers zum Abstand der Mittelpunkte aufeinanderfolgender Kugeln beträgt etwa 1 : 1,25. Jeder der Kugeln sind voneinander gesonderte Halteelemente zugeordnet, die zwischen den Kugeln angeordnet sind. Die Halteelemente sind daher sehr klein und können den Kugeln kaum Halt bieten.

Die aus der DE 29 06 128 A1 bekannte Kugelkette ist aus einer Vielzahl voneinander unabhängig ausgebildeter Ketteneinheiten gebildet, die jeweils der Führung lediglich einer der Kugeln dienen. Diese Anordnung hat daher eine lose Aufeinanderfolge der Kugeln zur Folge. Die die Kugeln aufnehmenden Öffnungen bieten den Kugeln keinen Halt. Daher verfügen die Ketteneinheiten überdies über von den Aufnahmeöffnungen getrennte Führungsblöcke, welche die Ketteneinheiten in dem Kugellaufkanal und insbesondere dessen Umlenkabschnitten bezüglich des Laufs der Kugeln zentrieren.

Weiterhin sei auf die DE 37 09 039 C2, die DE 89 14 085 U und die US 2,566,421 verwiesen.

Die eingangs angesprochene DE 198 24 250 A1 verbesserte die Laufruhe der vorstehend diskutierten, bekannten Wälzkörperketten durch Erhöhung der Zahl der möglichen Biegestellen des Trägerbands.

Demgegenüber ist es Aufgabe der vorliegenden Erfindung, ohne Einbuße an Tragfähigkeit bzw. Lastaufnahmevermögen der Wälzkörperketten eine noch weitergehende Flexibilisierung dieser Wälzkörperketten zu ermöglichen.

Erfindungsgemäß wird diese Aufgabe gelöst durch eine Wälzkörperkette, welche eine Mehrzahl von in dichter Aufeinanderfolge angeordneten Wälzkörpern sowie ein längliches Trägerband umfasst, und bei welcher das Trägerband eine Mehrzahl von Ausnehmungen zur Aufnahme der Wälzkörper aufweist, bei welcher das Trägerband ferner eine Mehrzahl von Halteelementen zum Halten der in den Ausnehmungen aufgenommenen Wälzkörper aufweist, wobei jedem Wälzkörper wenigstens ein Halteelement zugeordnet ist, und bei welcher das Trägerband außerdem wenigstens ein längliches flexibles Element zum Verbinden der Halteelemente umfasst, wobei darüber hinaus jeder Wälzkörper von dem ihm zugeordneten wenigstens einen Haltelement in Längsrichtung des Trägerbandes entweder nur an seiner vorauslaufenden Seite oder nur an seiner nachlaufenden Seite gehalten ist. D.h. dann, wenn wenigstens einem Teil der Wälzkörper eine Mehrzahl von Halteelementen zugeordnet ist, sind die ein und demselben Wälzkörper zugeordneten Halteelemente in Längsrichtung des Trägerbands gesehen entweder alle vor diesem Wälzkörper oder alle hinter diesem Wälzkörper angeordnet sind. Erfindungsgemäß wird jeder Wälzkörper also nur einseitig von dem bzw. den ihm zugeordneten Halteelement(en) in der zugehörigen Ausnehmung gesichert.

Durch die erfindungsgemäße Reduzierung der Bereiche, in denen die Wälzkörperkette Halteelemente aufweist, wird im Gegenzug die Ausdehnung der flexiblen Bereiche der Wälzkörperkette vergrößert, und damit die Flexibilität der Wälzkörperkette insgesamt erhöht. Durch die Reduzierung der Anzahl der Halteelemente wird jedoch die Funktion der Wälzkörperkette im Wälzkörperumlaufkanal nicht beeinträchtigt. Und auch beim Einführen der mit Wälzkörpern bestückten Wälzkörperkette in den Umlaufkanal und deren Entnahme aus diesem können die Haltelemente ihre Haltefunktion auf die Wälzkörper ausüben, solange das Trägerband geradlinig verläuft. Ferner erleichtert die größere Flexibilität des Trägerbands dessen Bestückung mit Wälzkörpern.

Wie vorstehend bereits an Hand der Diskussion des Standes der Technik angedeutet wurde, wird erfindungsgemäß unter einer dichten Aufeinanderfolge von Wälzkörpern eine Aufeinanderfolge verstanden, bei welcher das Verhältnis des Wälzkörperdurchmessers zum Abstand der Mittelpunkte aufeinanderfolgender Wälzkörper weniger als 1 : 1,5, vorzugsweise weniger als 1 : 1,25, am bervorzugtesten annähernd 1 : 1, beträgt.

Die erfindungsgemäße Wälzkörperkette und insbesondere deren Trägerband lassen sich in einfacher Weise herstellen. So kann das Trägerband einstückig, beispielsweise aus einem Kunststoffmaterial aus der Gruppe der Elastomere, wie z.B. Polyurethan, Hytrel oder dergleichen, gefertigt sein, vorzugsweise als Spritzgussteil.

Gemäß einer ersten Ausführungsvariante können die zwei benachbarten Wälzkörpern, vorzugsweise allen Wälzkörpern, zugeordneten Halteelemente entweder alle vor oder alle hinter diesen Wälzkörpern angeordnet sein. Gemäß einer alternativen zweiten Ausführungsvariante kann jedoch auch vorgesehen sein, dass die zwei benachbarten Wälzkörpern zugeordneten Halteelemente alle zwischen diesen Wälzkörpern angeordnet sind. Auch die zweite Ausführungsvariante kann periodisch fortgesetzt werden, so dass zwischen zwei aufeinander folgenden Wälzkörpern alternierend entweder alle diesen beiden Wälzkörpern zugeordneten Halteelemente oder kein einziges Halteelement angeordnet ist. Die beiden Ausführungsvarianten können aber auch miteinander gemischt verwendet werden.

Um bei der zweiten Ausführungsvariante verhindern zu können, dass bei geringem, ja im Extremfall sogar verschwindendem, Abstand der Halteelemente in der Hauptebene des Trägerbands eine Beeinträchtigung der Flexibilität des Trägerbands im Bereich zwischen aufeinanderfolgenden Wälzkörpern auftritt, kann der Abstand zweier benachbarter, aufeinander folgenden Wälzkörpern zugeordneter Halteelemente mit zunehmendem Abstand von der Hauptebene des Trägerbands zunehmen. Dies verhindert, dass ein den Biegewinkel begrenzender Kontakt benachbarter Halteelemente bereits bei kleinen Biegewinkeln auftritt. Dabei ist es besonders bevorzugt, wenn der Abstand der beiden Halteelemente zumindest in einem der Hauptebene des Trägerbands benachbarten Abschnitt mit zunehmendem Abstand von der Hauptebene des Trägerbands monoton zunimmt.

Das längliche Trägerband kann leiterartig ausgebildet sein, wobei die zwei seitlichen Randabschnitte des Trägerbands jeweils ein Holmenelement aufweisen und diese Holmenelemente durch im Wesentlichen in Querrichtung des Trägerbands verlaufende Sprossenelemente miteinander verbunden sind. Bei einem so ausgebildeten Trägerband können die Halteelemente an den Sprossenelementen angeordnet sein. Sie können jedoch auch an den Holmenelementen oder auch sowohl an den Sprossenelementen als auch an den Holmenelementen angeordnet sein.

In Weiterbildung der Erfindung kann wenigstens ein Sprossenelement als Doppelsprossenelement ausgebildet sein, d.h. durch einen quer zur Laufrichtung verlaufenden Spalt in zwei Teilsprossenelemente geteilt sein.

Dabei können zwei ein Doppelsprossenelement bildende Teilsprossenelemente getrennt voneinander mit einem Holmenelement verbunden sein. Die Verbindung kann jedoch auch über einen gemeinsamen Steg erfolgen. Um die Flexibilität des Trägerbands in möglichst geringem Maße zu beeinträchten, wird ferner vorgeschlagen, dass sich dieser Steg zu dem Holmenelement hin verjüngt.

Wenn sich das wenigstens eine Halteelement unterhalb und/oder oberhalb der Hauptebene des Trägerbands heraus erstreckt, so kann hierdurch eine sich über einen großen Winkelbereich erstreckende Haltefläche bereitgestellt werden, die einen sicheren Halt des Wälzkörpers gewährleistet. Der mögliche Winkelbereich ist lediglich dadurch eingeschränkt, dass die Halteelemente insbesondere an einem Umlenkabschnitt der Laufbahn des Trägerbands nicht an einer Lauffläche der Wälzkörper schleifen sollen.

Ein besonders sicherer Halt eines Wälzkörpers kann erzielt werden, wenn dieser Wälzkörper zum einen von einem möglichst großen Anteil der Umfangsfläche der diesen Wälzkörper aufnehmenden Ausnehmung und zum anderen von einer Mehrzahl von Halteelementen gehalten wird. Vorzugsweise können die Halteelemente ferner eine Anlage- bzw. Haltefläche aufweisen, die an die Außenkontur der Wälzkörper angepasst ist.

Ein Halteelement kann beispielsweise zylinderförmig ausgebildet sein, wobei eine einem Wälzkörper zugewandte Deckelfläche des Zylinders die Aufgabe einer solchen Anlage- bzw. Haltefläche übernehmen kann. Wenn das Halteelement einem kugelförmigen Wälzkörper zugeordnet ist, ist eine sphärisch-konkave Form dieser Deckelfläche vorteilhaft. Außerdem kann die Achse eines so ausgeführten Halteelements parallel zur Längsrichtung des Führungsbands liegen. Ein so ausgeführtes Halteelement ist vorzugsweise im Mittelabschnitt des Führungsbands angeordnet.

Die Halteelemente können jedoch auch in den Randbereichen des Führungsband angeordnet sein. Eine solche Anordnung bietet sich insbesondere dann an, wenn einem Wälzkörper mehr als ein Halteelement zugeordnet ist. Beispielsweise können dann an beiden Randabschnitten des Führungsbands Halteelemente angeordnet sein. Insbesondere dann, wenn die Wälzkörper Kugeln sind, ist eine solche Anordnung vorteilhaft. Für die Form der Halteelemente kommen dann Ausschnitte aus einer Hohlkugel oder auch Abschnitte eines Rings in Betracht.

Die vorstehend diskutierten Formen von Halteelementen können miteinander und auch mit anderen möglichen Ausbildungsvarianten kombiniert werden.

Die Erfindung wird im Folgenden an einigen Ausführungsbeispielen an Hand der beiliegenden Zeichnung näher erläutert werden. Es stellt dar:
- Fig. 1 bis 6: Ausführungsformen erfindungsgemäßer Wälzkörperketten in Draufsicht; und
- Fig. 7 und 8: weitere Ausführungsformen erfindungsgemäßer Wälzkörperkette in Perspektivansicht.

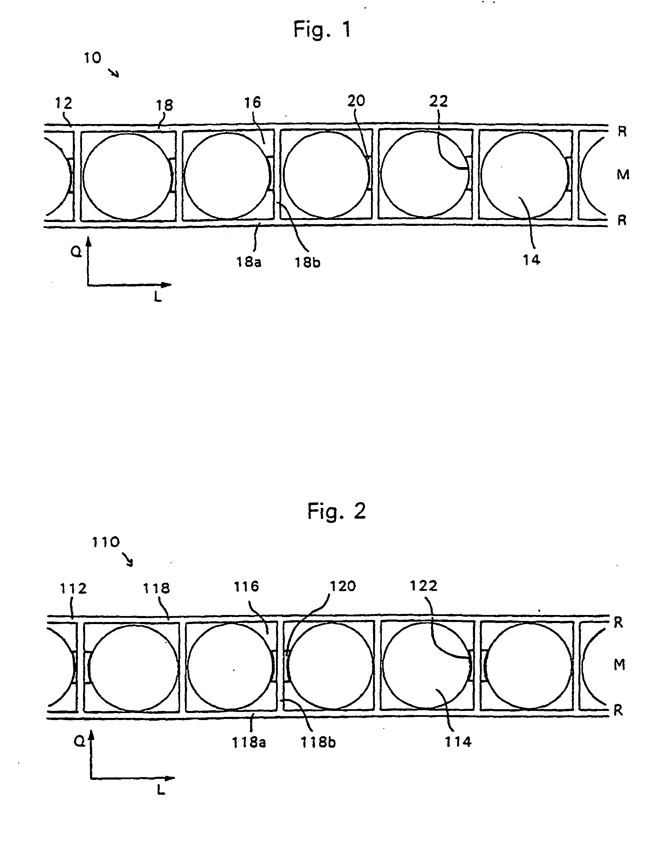

In Fig. 1 ist eine erfindungsgemäße Wälzkörperkette allgemein mit 10 bezeichnet. Sie umfasst ein längliches, flexibles Trägerband 12, das zwei Randabschnitte R und einen Mittelabschnitt M aufweist. In Ausnehmungen 16 des Trägerbands 12 sind Wälzkörper 14, beispielsweise Kugeln, aufgenommen. Die Wälzkörper 14 sind mittels Halteelementen 20 in den Ausnehmungen 16 gehalten.

Das Trägerband 12 umfasst ein leiterartig ausgebildetes, flexibles Element 18 mit zwei sich in Längsrichtung L erstreckenden Holmen 18a und einer Mehrzahl von sich in Querrichtung Q erstreckenden Sprossenelementen 18b. Die Sprossenelemente 18b trennen die Ausnehmungen 16 voneinander und haben darüber hinaus die Aufgabe, einer direkten Berührung zweier aufeinanderfolgender Wälzkörper 14 und somit einem Reibkontakt dieser Wälzkörper 14 vorzubeugen, was zu einem besseren Ablaufverhalten führt.

Jedem Wälzkörper 14 ist ein einziges Halteelement 20 zugeordnet, das im Mittelabschnitt M des Trägerbands 12 angeordnet ist und sowohl oberhalb als auch unterhalb aus der von dem Trägerband 12 gebildeten Ebene herausragt. An seiner dem Wälzkörper 14 zugewandten Seite weist das Halteelement 20 eine der Oberfläche des Wälzkörpers 14 angepasste Anlage- bzw. Haltefläche 22 auf. Sind die Wälzkörper 14 Kugeln, so ist diese Anlage- bzw. Haltefläche 22 also vorzugsweise sphärisch-konkav.

Bei der in Fig. 1 dargestellten Ausführungsform sind die Halteelemente 20 alle auf der gleichen Seite der Wälzkörper 14 angeordnet, nämlich in Ansicht gemäß Fig. 1 alle auf deren rechter Seite.

In Fig. 2 ist eine weitere Ausführungsform einer erfindungsgemäßen Wälzkörperkette dargestellt, die im Wesentlichen der Ausführungsform gemäß Fig. 1 entspricht. Daher sind in Fig. 2 analoge Teile mit gleichen Bezugszeichen versehen wie in Fig. 1, jedoch vermehrt um die Zahl 100. Darüber hinaus wird die Ausführungsform gemäß Fig. 2 im folgenden nur insoweit beschrieben werden, als sie sich von der Ausführungsform gemäß Fig. 1 unterscheidet, auf deren Beschreibung ansonsten hiermit ausdrücklich verwiesen sei.

Wie bei der Ausführungsform gemäß Fig. 1, weist bei der Wälzkörperkette 110 gemäß Fig. 2 das Trägerband 112 eine Mehrzahl von Ausnehmungen 116 zur Aufnahme von Wälzkörpern 114 auf. Außerdem ist jedem Wälzkörper 114 ein Halteelement 120 mit einer Haltefläche 122 zugeordnet. Entsprechend der Ausführungsform gemäß Fig. 1 sind die Halteelemente 120 im Mittelabschnitt M des flexiblen Elements 118 des Trägerbands 112 angeordnet.

Der Hauptunterschied zwischen den Ausführungsformen gemäß Fig. 1 und Fig. 2 besteht darin, dass sich bei der Wälzkörperkette 110 gemäß Fig. 2 die Halteelemente 120 nicht alle auf derselben Seite der Wälzkörper 114 befinden. Vielmehr sind die Halteelemente 120 alternierend auf der rechten bzw. der linken Seite der Wälzkörper 114 angeordnet. Hieraus ergibt sich bezüglich der Querstege 118b des von Holmen 118a und Querstegen 118b gebildeten Leiterelements 118 die folgende alternierende Struktur: Während an einigen Querstegen 118b ein Paar von Halteelementen 120 angeordnet ist, welches einem benachbarten Paar von Wälzkörpern 114 zugeordnet ist, ist an den jeweils benachbarten Querstegen 118b kein einziges Halteelement 120 vorgesehen.

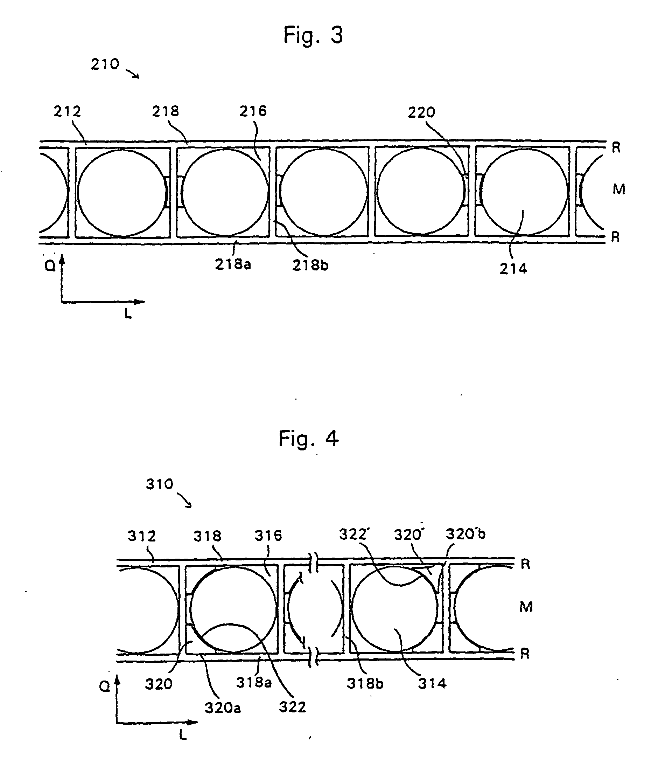

Eine weitere Ausführungsform einer erfindungsgemäßen Wälzkörperkette ist in Fig. 3 dargestellt. Im Vergleich mit Fig. 1 sind in Fig. 3 analoge Teile mit gleichen Bezugszeichen versehen, jedoch vermehrt um die Zahl 200. Ferner wird die Ausführungsform gemäß Fig. 3 im Folgenden nur insoweit beschrieben, als sie sich von den vorstehenden Ausführungsformen unterscheidet, auf deren Beschreibung hiermit ausdrücklich verwiesen sei.

Die Wälzkörperkette 210 gemäß Fig. 3 entspricht einer Kombination bzw. Mischform der Ausführungsformen gemäß Fig. 1 und 2. D.h. bezüglich der Längsrichtung L des von Holmen 218a und Querstegen 218b gebildeten, flexiblen Elements 218 des Trägerbands 212 sind die Halteelemente 220, die den in den Ausnehmungen 216 aufgenommenen Wälzkörpern 214 zugeordnet sind, in ungeordneter Folge entweder vor oder hinter diesen Wälzkörpern 214 vorgesehen.

Auch die Ausführungsform gemäß Fig. 4 entspricht im Wesentlichen den vorstehend beschriebenen Wälzkörperketten gemäß Fig. 1 bis 3. Daher sind in Fig. 4 analoge Teile mit gleichen Bezugszeichen versehen wie in Fig. 1, jedoch vermehrt um die Zahl 300. Darüber hinaus wird die Ausführungsform gemäß Fig. 4 im Folgenden nur insoweit beschrieben werden, als sie sich von den Ausführungsformen gemäß Fig. 1 bis 3 unterscheidet, auf deren Beschreibung hiermit ansonsten ausdrücklich verwiesen sei.

Die Wälzkörperkette 310 gemäß Fig. 4 unterscheidet sich von den Wälzkörperketten 10, 110 und 210 hauptsächlich dadurch, dass die Halteelemente 320 zum Halten der in den Ausnehmungen 316 aufgenommenen Wälzkörper 314 in den Randbereichen R des Trägerbands 312 angeordnet sind, d.h. in den Übergangsbereichen der Querstege 318b und der Holmen 318a des flexiblen Elements 318. Wie in der linken Hälfte von Fig. 4 dargestellt ist, können sich alle Halteelemente 320 auf derselben Seite der Wälzkörper 314 befinden, was der Ausführungsform gemäß Fig. 1 entspricht. Die Halteelemente 320 können jedoch analog zur Ausführungsform gemäß Fig. 2 auch alternierend angeordnet sein, wie dies in der rechten Hälfte von Fig. 4 dargestellt ist. Weiterhin sind auch Mischformen analog zur Ausführungsform gemäß Fig. 3 denkbar.

Eine noch weitergehende Flexibilisierung der Wälzkörperkette 310 kann durch Einsatz von Halteelementen 320' erzielt werden, von denen in Fig. 4 aus Gründen der Einfachheit lediglich ein einziges dargestellt ist. Diese Halteelemente 320' sind nur mittels eines von der Haltefläche 322' entfernt gelegenen Verbindungsabschnitts 320'b mit den Holmen 318a und gewünschtenfalls den Enden der Querstege 318b verbunden, während die Halteelemente 320 auch über an die Halteflächen 322 angrenzende Abschnitte 320a mit den Holmen 318a zusammenhängen.

Festzuhalten ist, dass auch Kombinationen der Ausführungsformen gemäß Fig. 1 bis 4 denkbar sind.

Die Ausführungsform der Wälzkörperkette gemäß Fig. 5 entspricht im wesentlichen jener gemäß der Fig. 2. Daher sind in Fig. 5 analoge Teile mit gleichen Bezugszeichen versehen wie in Fig. 2, jedoch vermehrt um die Zahl 300, d.h. im Vergleich mit Fig. 1 vermehrt um die Zahl 400. Darüber hinaus wird die Ausführungsform gemäß Fig. 5 im Folgenden nur insoweit beschrieben werden, als sie sich von der Ausführungsform gemäß Fig. 2 unterscheidet, auf deren Beschreibung hiermit ansonsten ausdrücklich verwiesen sei.

Die Wälzkörperkette 410 gemäß Fig. 5 unterscheidet sich von der Wälzkörperkette 110 gemäß Fig. 2 dadurch, dass die Sprossenelemente 418b des flexiblen Elements 418 durch parallel zur Querrichtung Q des Trägerbands verlaufende Spalte in jeweils zwei Teilsprossenelemente 418c unterteilt sind. Die Teilsprossenelemente 418c sind jeweils voneinander getrennt an den wenigstens zwei Holmenelementen 418a angeordnet. An den Doppelsprossen 418b sind jeweils alternierend Paare von Halteelementen 420 zum Halten der in den Ausnehmungen 416 aufgenommenen Wälzkörper 414 bzw. kein einziges Haltelement 420 vorgesehen. Grundsätzlich könnten die nicht mit Haltelementen 420 bestückten Querstege 418b entsprechend der Ausführungsform gemäß Fig. 2 auch als Einfachstege ausgebildet sein.

Eine solche Ausführungsform ist insbesondere deshalb vorteilhaft, da die Anzahl der flexiblen Stellen durch die Spaltung der Sprossenelemente 418b in Teilsprossenelemente 418c erhöht wird, was sich positiv auf die Flexibilität des Trägerbands 412 auswirkt.

Die Ausführungsform gemäß Fig. 6 entspricht im wesentlichen jener gemäß Fig. 5. Daher sind in Fig. 6 analoge Teile mit gleichen Bezugszeichen versehen wie in Fig. 5, jedoch vermehrt um die Zahl 100, d.h. im Vergleich mit Fig. 1 vermehrt um die Zahl 500. Darüber hinaus wird die Ausführungsform gemäß Fig. 6 im Folgenden nur insoweit beschrieben werden, als sie sich von der Ausführungsform gemäß Fig. 5 unterscheidet, auf deren Beschreibung hiermit ansonsten ausdrücklich verwiesen sei.

Die Wälzkörperkette 510 gemäß Fig. 6 weist ebenso wie die Wälzkörperkette 410 gemäß Fig. 5 in Teilsprossenelemente 518c gespaltene Sprossenelemente 518b auf. Sie unterscheidet sich von der Wälzkörperkette 410 gemäß Fig. 5 jedoch dadurch, dass zwei ein Doppelsprossenelement 518b bildende Teilsprossenelemente 518c über einen gemeinsamen Steg 518d mit den Holmenelementen 518a des flexiblen Elements 518 verbunden sind. Zudem können die Stege 518d zu den Holmenelementen 518a hin verjüngt sein, was sich positiv auf die Flexibilität des Trägerbands 512 auswirkt. Hinsichtlich der Anordnung der Halteelemente 520 zum Halten der in den Ausnehmungen 516 aufgenommenen Wälzkörper 514 entspricht die Ausführungsform gemäß Fig. 6 jener gemäß Fig. 5.

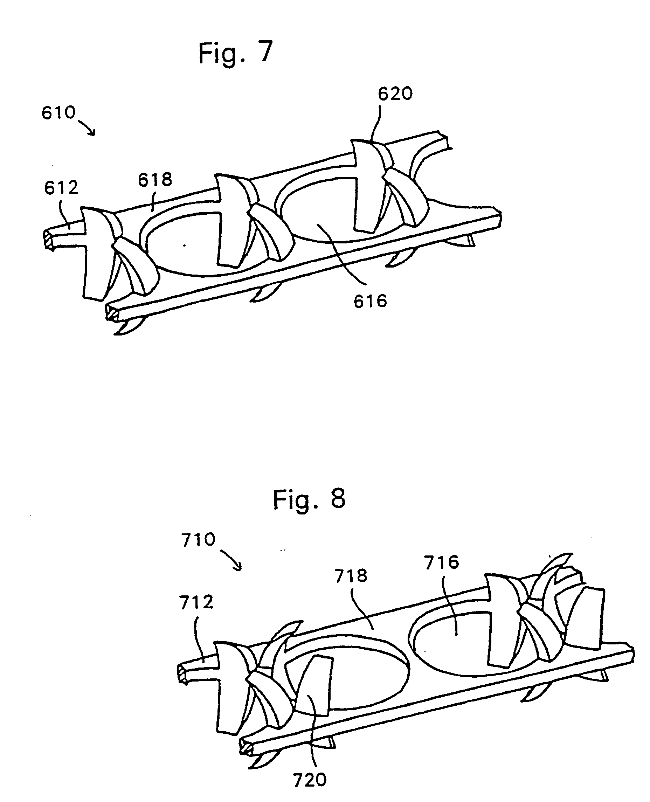

Die Ausführungsform der Wälzkörperkette gemäß Fig. 7 entspricht im Wesentlichen jener gemäß Fig. 4. Daher sind in Fig. 7 analoge Teile mit gleichen Bezugszeichen versehen wie in Fig. 4, jedoch vermehrt um die Zahl 300, d.h. im Vergleich mit Fig. 1 vermehrt um die Zahl 600. Darüber hinaus wird die Ausführungsform gemäß Fig. 7 im Folgenden nur insoweit beschrieben werden, als sie sich von der Ausführungsform gemäß Fig. 4 unterscheidet, auf deren Beschreibung hiermit ansonsten ausdrücklich verwiesen sei.

Die Wälzkörperkette 610 gemäß Fig. 7 weist ebenso wie die Wälzkörperkette 310 gemäß Fig. 4 Halteelemente 620 auf, die im Wesentlichen in den Randbereichen R des Trägerbands 612 angeordnet sind. Das flexible Element 618 des Trägerbands 612 der Wälzkörperkette 610 gemäß Fig. 7 unterscheidet sich von der Wälzkörperkette 310 gemäß Fig. 4 jedoch dadurch, dass die Ausnehmungen 616 zur Aufnahme der Wälzkörper an die Form der Wälzkörper angepasst sind, so dass im Wesentlichen die gesamte Umfangsfläche der Ausnehmungen 616 eine die Wälzkörper haltende Funktion übernimmt. In Fig. 7 sind die Ausnehmungen 616 kreisförmig, wie es für kugelförmige Wälzkörper sinnvoll ist. An die Form der Wälzkörper angepasste Ausnehmungen 616 sind jedoch auch für anderweitig ausgestaltete Wälzkörper möglich.

Die Ausführungsform der Wälzkörperkette gemäß Fig. 8 entspricht im wesentlichen jener Wälzkörperkette gemäß der Fig. 7. Daher sind in Fig. 8 analoge Teile mit gleichen Bezugszeichen versehen wie in Fig. 7, jedoch vermehrt um die Zahl 100, d.h. im Vergleich mit Fig. 1 vermehrt um die Zahl 700. Darüber hinaus wird die Ausführungsform gemäß Fig. 8 im Folgenden nur insoweit beschrieben werden, als sie sich von der Ausführungsform gemäß Fig. 7 unterscheidet, auf deren Beschreibung hiermit ansonsten ausdrücklich verwiesen sei.

Die Ausgestaltung der Ausnehmungen 716 des flexiblen Elements 718 des Trägerbands 712 entspricht der in Fig. 7 beschriebenen Ausgestaltung. Die im Wesentlichen gesamte Umfangsfläche der Ausnehmungen 716 übernimmt folglich auch in dieser Ausgestaltung einer Wälzkörperkette 710 eine die Wälzkörper haltende Funktion. Anders als in der Ausgestaltung einer Wälzkörperkette 610 gemäß Fig. 7 ist die Anordnung der Haltelemente 720 in Längsrichtung L bezüglich der Wälzkörper in der Ausgestaltung gemäß Fig. 8 jedoch analog der Anordnung in der Ausgestaltung gemäß Fig 2.

Es sei an dieser Stelle ausdrücklich betont, dass auch Mischformen aller in den Fig. 1 bis 8 dargestellten Ausführungsformen und auch Mischformen mit weiteren möglichen Ausführungsformen möglich sind, wie beispielsweise in der Ausführungsform gemäß Fig. 3 dargestellt ist.

In allen vorstehend erläuterten Ausführungsformen ist das Träger- bzw. Führungsband bevorzugt einstückig und aus Kunststoff gefertigt, beispielsweise als Spritzgussteil. Als Kunststoffe kommen dabei beispielsweise Elastomere, wie z.B. Polyurethan, Hytrel oder dergleichen in Betracht.

Obgleich in allen vorstehend erläuterten Fig. 1 bis 8 Kugelketten dargestellt sind, sei betont, dass die vorliegende Erfindung auch bei mit anderen Arten von Wälzkörpern, beispielsweise Rollen oder dergleichen, bestückten Wälzkörperketten verwirklicht werden kann.

## Patentansprüche

1. Wälzkörperkette (10; 110; 210; 310; 410; 510; 610; 710) umfassend:
- eine Mehrzahl von in dichter Aufeinanderfolge angeordneten Wälzkörpern (14; 114; 212; 314; 414; 514) und
- ein längliches Trägerband (12; 112; 212; 312; 412; 512; 612; 712) mit
- einer Mehrzahl von Ausnehmungen (16; 116; 216; 316; 416; 516; 616; 716) zur Aufnahme der Wälzkörper (14; 114; 214; 314; 414; 514),
- einer Mehrzahl von Halteelementen (20; 120; 220; 320; 420; 520; 620; 720) zum Halten der in den Ausnehmungen (16; 116; 216; 316; 416; 516; 616; 716) aufgenommenen Wälzkörper (14; 114; 214; 314; 414; 514),
wobei jedem Wälzkörper (14; 114; 214; 314; 414; 514) wenigstens ein Halteelement (20; 120; 220; 320; 420; 520; 620; 720) zugeordnet ist, und
- wenigstens einem länglichen flexiblen Element (18; 118; 218; 318; 418; 518; 618; 718) zum Verbinden der Halteelemente (20; 120; 220; 320; 420; 520; 620; 720),
**dadurch gekennzeichnet, dass** jeder Wälzkörper (14; 114; 214; 314; 414; 514) von dem ihm zugeordneten wenigstens einen Haltelement (20; 120; 220; 320; 420; 520; 620; 720) in Längsrichtung (L) des Trägerbandes (12; 112; 212; 313; 412; 512; 612; 712) entweder nur an seiner vorauslaufenden Seite oder nur an seiner nachlaufenden Seite gehalten ist.

2. Wälzkörperkette nach Anspruch 1,
**dadurch gekennzeichnet, dass** das Trägerband (12; 112; 212; 312; 412; 512; 612; 712) zwei sich in Längsrichtung (L) erstreckende flexible Streifenelemente umfasst, die seinen seitlichen Randabschnitten (R) zugeordnet sind.

3. Wälzkörperkette nach Anspruch 2,
**dadurch gekennzeichnet, dass** das Trägerband (12; 112; 212; 312; 412; 512) leiterartig ausgebildet ist mit zwei in Längsrichtung (L) verlaufenden, die Streifenelemente bildenden Holmenelementen (18a; 118a; 218a; 318a; 418a; 518a) und einer Mehrzahl von diese Holmenelemente verbindenden Sprossenelementen (18b; 118b; 218b; 318b; 418b; 518b).

4. Wälzkörperkette nach einem der Ansprüche 1 bis 3,
**dadurch gekennzeichnet, dass** das wenigstens eine Halteelement (20; 120; 220; 320; 420; 520; 620; 720) oberhalb oder/und unterhalb aus der von dem Trägerband (12; 112; 212; 312; 412; 512; 612; 712) gebildeten Ebene herausragt.

5. Wälzkörperkette nach einem der Ansprüche 1 bis 4,
**dadurch gekennzeichnet, dass** die zwei benachbarten Wälzkörpern (14; 214; 314; 414; 614) zugeordneten Halteelemente (20; 220; 320; 420; 620) entweder alle vor oder alle hinter diesen Wälzkörpern (14; 214; 314; 414; 614) angeordnet sind.

6. Wälzkörperkette nach Anspruch 5,
**dadurch gekennzeichnet, dass** die allen Wälzkörpern (14; 614) zugeordneten Halteelemente (20; 620) entweder alle vor oder alle hinter diesen Wälzkörpern (14; 614) angeordnet sind.

7. Wälzkörperkette nach einem der Ansprüche 1 bis 4,
**dadurch gekennzeichnet, dass** von den zwei benachbarten Wälzkörpern (114; 214; 314; 414; 514) zugeordneten Halteelementen (120; 220; 320; 420; 520; 720) das dem einen Wälzkörper (114; 214; 314; 414; 514) zugeordnete wenigstens eine Halteelement (120; 220; 320; 420; 520; 720) vor diesem Wälzkörper (114; 214; 314; 414; 514) angeordnet ist, während das dem anderen Wälzkörper (114; 214; 314; 414; 514) zugeordnete wenigstens eine Halteelement (120; 220; 320; 420; 520; 720) hinter diesem Wälzkörper (114; 214; 314; 414; 514) angeordnet ist.

8. Wälzkörperkette nach Anspruch 7,
**dadurch gekennzeichnet, dass** zwischen jeweils zwei benachbarten Wälzkörpern (114; 414; 514) alternierend entweder alle diesen beiden Wälzkörpern (114; 414; 514) zugeordneten Halteelemente (120; 420; 520; 720) angeordnet sind oder kein Halteelement (120; 420; 520; 720) angeordnet ist.

9. Wälzkörperkette nach Anspruch 7 oder 8,
**dadurch gekennzeichnet, dass** das dem einen Wälzkörper (114; 414; 514) zugeordnete wenigstens eine Halteelement (120; 420; 520) und das dem anderen Wälzkörper (114; 414; 514) zugeordnete wenigstens eine Halteelement (120; 420; 520) mittels eines Sprossenelements (118b; 418b; 518b) voneinander getrennt sind.

10. Wälzkörperkette nach Anspruch 9,
**dadurch gekennzeichnet, dass** wenigstens ein Sprossenelement (518b; 518b) als Doppel-Sprossenelement (418b; 518b) ausgebildet ist, d.h. zwei Teil-Sprossenelemente (418c; 518c) umfasst, wobei das dem einen Wälzkörper (414,514) zugeordnete wenigstens eine Halteelement (420; 520) dem einen Teil-Sprossenelement (418c; 518c) und das dem anderen Wälzkörper (414; 514) zugeordnete wenigstens eine Halteelement (420; 520) dem anderen Teil-Sprossenelement (418c; 518c) zugeordnet ist.

11. Wälzkörperkette nach Anspruch 10,
**dadurch gekennzeichnet, dass** die beiden Teil-Sprossenelemente (418c) mit wenigstens einem Holmenelement (418a) voneinander getrennt verbunden sind.

12. Wälzkörperkette nach Anspruch 10,
**dadurch gekennzeichnet, dass** die beiden Teil-Sprossenelemente (518c) mit wenigstens einem Holmenelement (518a) über einen gemeinsamen Steg (518d) verbunden sind.

13. Wälzkörperkette nach Anspruch 12,
**dadurch gekennzeichnet, dass** der Steg (518d) sich zu dem wenigstens einen Holmenelement (518a) hin verjüngt.

14. Wälzkörperkette nach einem der Ansprüche 1 bis 13,
**dadurch gekennzeichnet, dass** jedem Wälzkörper (14; 114; 214; 414; 514) ein einziges Halteelement (20; 120; 220; 420; 520) zugeordnet ist, das vorzugsweise in einem Mittelabschnitt (M) des Trägerbands (12; 112; 212; 412; 512) angeordnet ist.

15. Wälzkörperkette nach einem der Ansprüche 1 bis 13,
**dadurch gekennzeichnet, dass** jedem Wälzkörper (314; 614; 714) wenigstens zwei Haltelemente (320; 620; 720) zugeordnet sind, die vorzugsweise in seitlichen Randabschnitten (R) des Trägerbands (312; 612; 712) angeordnet sind.

16. Wälzkörperkette nach einem der Ansprüche 1 bis 15,
**dadurch gekennzeichnet, dass** die Wälzkörper zum einen von den Halteelementen (620; 720) und zum anderen von der im Wesentlichen gesamten Umfangsfläche der diese Wälzkörper aufnehmenden Ausnehmung (616; 716) gehalten werden.

17. Wälzkörperkette nach einem der Ansprüche 1 bis 16,
**dadurch gekennzeichnet, dass** die Halteelemente (20; 120; 220; 320; 420; 520; 620; 720) eine an die Außenkontur der Wälzkörper (14; 114; 214; 314; 414; 514) angepasste Anlage- bzw. Haltefläche (22) aufweisen.

18. Wälzkörperkette nach einem der Ansprüche 1 bis 17,
**dadurch gekennzeichnet, dass** das Trägerband (12; 112; 212; 312; 412; 512; 612; 712) einstückig ausgebildet ist.

19. Wälzkörperkette nach einem der Ansprüche 1 bis 18,
**dadurch gekennzeichnet, dass** das Trägerband (12; 112; 212; 312; 412; 512; 612; 712) aus Kunststoff gefertigt ist.

20. Wälzkörperkette nach einem der Ansprüche 1 bis 19,
**dadurch gekennzeichnet, dass** das Trägerband (12; 112; 212; 312; 412; 512; 612; 712) spritzgegossen ist.

21. Wälzkörperkette nach einem der Ansprüche 1 bis 20,
**dadurch gekennzeichnet, dass** die Wälzkörper (14; 114; 214; 314; 414; 514) Rollen oder Kugeln sind.

## Claims

1. Chain of rolling elements (10; 110; 210; 310; 410; 510; 610; 710) comprising:
- a plurality of rolling elements (14; 114; 212; 314; 414; 514) arranged in close succession and
- an elongate carrier belt (12; 112; 212; 312; 412; 512; 612; 712) with
- a plurality of recesses (16; 116; 216; 316; 416; 516; 616; 716) for receiving the rolling elements (14; 114; 214; 314; 414; 514),
- a plurality of retainers (20; 120; 220; 320; 420; 520; 620; 720) for retaining the rolling elements (14; 114; 214; 314; 414; 514) received in the recesses (16; 116; 216; 316; 416; 516; 616; 716), wherein at least one retainer (20; 120; 220; 320; 420; 520; 620; 720) is associated with each rolling element (14; 114; 214; 314; 414; 514), and
- at least one elongate flexible element (18; 118; 218; 318; 418; 518; 618; 718) for connecting the retainers (20; 120; 220; 320; 420; 520; 620; 720),
**characterised in that** each rolling element (14; 114; 214; 314; 414; 514) is held either only on its leading side or only on its trailing side by the at least one retainer (20; 120; 220; 320; 420; 520; 620; 720) associated with it in the longitudinal direction (L) of the carrier belt (12; 112; 212; 313; 412; 512; 612; 712).

2. Chain of rolling elements according to claim 1, **characterised in that** the carrier belt (12; 112; 212; 312; 412; 512; 612; 712) comprises two flexible strip elements extending in the longitudinal direction (L) which are associated with its lateral edge portions (R).

3. Chain of rolling elements according to claim 2, **characterised in that** the carrier belt (12; 112; 212; 312; 412; 512) is designed in the form of a ladder with two side rail elements (18a; 118a; 218a; 318a; 418a; 518a) extending in the longitudinal direction (L) and forming the strip elements and a plurality of rung elements (18b; 118b; 218b; 318b; 418b; 518b) connecting these side rail elements.

4. Chain of rolling elements according to any one of claims 1 to 3, **characterised in that** the at least one retainer (20; 120; 220; 320; 420; 520; 620; 720) projects above or/and below from the plane formed by the carrier belt (12; 112; 212; 312; 412; 512; 612; 712).

5. Chain of rolling elements according to any one of claims 1 to 4, **characterised in that** the retainers (20; 220; 320; 420; 620) associated with two adjacent rolling elements (14; 214; 314; 414; 614) are either arranged all before or all after these rolling elements (14; 214; 314; 414; 614).

6. Chain of rolling elements according to claim 5, **characterised in that** the retainers (20, 620) associated with all the rolling elements (14; 614) are arranged either all before or all after these rolling elements (14; 614).

7. Chain of rolling elements according to any one of claims 1 to 4, **characterised in that**, of the retainers (120; 220; 320; 420; 520; 720) associated with the two adjacent rolling elements (114; 214; 314; 414; 514), the at least one retainer (120; 220; 320; 420; 520; 720) associated with the one rolling element (114; 214; 314; 414; 514) is arranged before this rolling element (114; 214; 314; 414; 514), while the at least one retainer (120; 220; 320; 420; 520; 720) associated with the other rolling element (114; 214; 314; 414; 514) is arranged after this rolling element (114; 214; 314; 414; 514).

8. Chain of rolling elements according to claim 7, **characterised in that**, alternately, either all retainers (120; 420; 520; 720) associated with these two rolling elements (114; 414; 514) or no retainer (120; 420; 520; 720) is arranged between two respective adjacent rolling elements (114; 414; 514).

9. Chain of rolling elements according to claim 7 or 8, **characterised in that** the at least one retainer (120; 420; 520) associated with the one rolling element (114; 414; 514) and the at least one retainer (120; 420; 520) associated with the other rolling element (114; 414; 514) are separated from one another by means of a rung element (118b; 418b; 518b).

10. Chain of rolling elements according to claim 9, **characterised in that** at least one rung element (518b; 518b) is designed as a double rung element (418b; 518b), i.e. comprises two part rung elements (418c; 518c), wherein the at least one retainer (420; 520) associated with the one rolling element (414; 514) is associated with the one part rung element (418c; 518c) and the at least one retainer (420; 520) associated with the other rolling element (414; 514) is associated with the other part rung element (418c; 518c).

11. Chain of rolling elements according to claim 10, **characterised in that** the two part rung elements (418c) are, separately from one another, connected to at least one side rail element (418a).

12. Chain of rolling elements according to claim 10, **characterised in that** the two part rung elements (518c) are connected to at least one side rail element (518a) via a common web (518d).

13. Chain of rolling elements according to claim 12, **characterised in that** the web (518d) tapers toward the at least one side rail element (518a).

14. Chain of rolling elements according to any one of claims 1 to 13, **characterised in that** a single retainer (20; 120; 220; 420; 520) is associated with each rolling element (14; 114; 214; 414; 514) and is preferably arranged in a central portion (M) of the carrier belt (12; 112; 212; 412; 512).

15. Chain of rolling elements according to any one of claims 1 to 13, **characterised in that** at least two retainers (320; 620; 720) are associated with each rolling element (314; 614; 714) and are preferably arranged in lateral edge portions (R) of the carrier belt (312; 612; 712).

16. Chain of rolling elements according to any one of claims 1 to 15, **characterised in that** the rolling elements are held, on the one hand, by the retainers (620; 720) and, on the other hand, by the substantially entire peripheral face of the recess (616; 716) receiving these rolling elements.

17. Chain of rolling elements according to any one of claims 1 to 16, **characterised in that** the retainers (20; 120; 220; 320; 420; 520; 620; 720) have a contact or holding face (22) adapted to the outer contour of the rolling elements (14; 114; 214; 314; 414; 514).

18. Chain of rolling elements according to any one of claims 1 to 17, **characterised in that** the carrier belt (12; 112; 212; 312; 412; 512; 612; 712) is designed in one piece.

19. Chain of rolling elements according to any one of claims 1 to 18, **characterised in that** the carrier belt (12; 112; 212; 312; 412; 512; 612; 712) is made from plastics material.

20. Chain of rolling elements according to any one of claims 1 to 19, **characterised in that** the carrier belt (12; 112; 212; 312; 412; 512; 612; 712) is injection moulded.

21. Chain of rolling elements according to any one of claims 1 to 20, **characterised in that** the rolling elements (14; 114; 214; 314; 414; 514) are rollers or balls.

## Revendications

1. Chaîne d'organes de roulement (10 ; 110 ; 210 ; 310 ; 410 ; 510; 610; 710) comprenant :
- une pluralité d'organes de roulement (14 ; 114 ; 214 ; 314 ; 414 ; 514) disposés les uns à la suite des autres de manière compacte et
- une bande porteuse oblongue (12 ; 112 ; 212 ; 312 ; 412 ; 512 ; 612 ; 712) avec
- une pluralité d'évidements (16 ; 116 ; 216 ; 316 ; 416 ; 516 ; 616 ; 716) destinés à recevoir les organes de roulement (14 ; 114 ; 214 ; 314 ; 414 ; 514),
- une pluralité d'éléments de retenue (20 ; 120 ; 220 ; 320 ; 420 ; 520 ; 620 ; 720) destinés au maintien des organes de roulement (14 ; 114 ; 214 ; 314 ; 414 ; 514) logés dans les évidements (16 ; 116 ; 216 ; 316 ; 416 ; 516 ; 616 ; 716),
au moins un élément de retenue (20 ; 120 ; 220 ; 320 ; 420 ; 520 ; 620 ; 720) étant affecté à chaque organe de roulement (14 ; 114 ; 214 ; 314 ; 414 ; 514), et
- au moins un élément flexible oblong (18 ; 118 ; 218 ; 318 ; 418 ; 518 ; 618 ; 718) destiné au raccordement des éléments de retenue (20 ; 120 ; 220 ; 320 ; 420 ; 520 ; 620 ; 720),
**caractérisée en ce que** chaque organe de roulement ( 14 ; 114 ; 214 ; 314 ; 414 ; 514) est maintenu par l'élément de retenue (20 ; 120 ; 220 ; 320 ; 420 ; 520 ; 620 ; 720) au nombre minimum d'un qui lui est affecté, dans le sens longitudinal (L) de la bande porteuse (12 ; 112 ; 212 ; 312 ; 412 ; 512 ; 612 ; 712), soit uniquement au niveau de son côté avant, soit uniquement au niveau de son côté arrière.

2. Chaîne d'organes de roulement selon la revendication 1, **caractérisée en ce que** la bande porteuse (12 ; 112 ; 212 ; 312 ; 412 ; 512 ; 612 ; 712) comprend deux éléments en bandes flexibles s'étendant dans le sens longitudinal (L), qui sont affectés à ses sections périphériques latérales (R)

3. Chaîne d'organes de roulement selon la revendication 2, **caractérisée en ce que** la bande porteuse (12 ; 112 ; 212 ; 312 ; 412 ; 512) est réalisée en forme d'échelle, avec deux éléments du genre montant (18a ; 118a ; 218a ; 318a ; 418a ; 518a) s'étendant dans le sens longitudinal (L) et formant les éléments en bande ainsi qu'une pluralité d'éléments du genre barreau (18b ; 118b ; 218b ; 318b ; 418b; 518b) reliant ces éléments du genre montant.

4. Chaîne d'organes de roulement selon l'une des revendications 1 à 3, **caractérisée en ce que** l'élément de retenue (20 ; 120 ; 220 ; 320 ; 420 ; 520 ; 620 ; 720) au nombre minimum d'un dépasse au-dessus et/ou en dessous du plan formé par la bande porteuse (12 ; 112 ; 212 ; 312 ; 412 ; 512 ; 612 ; 712).

5. Chaîne d'organes de roulement selon l'une des revendications 1 à 4, **caractérisée en ce que** les éléments de retenue (20 ; 220 ; 320 ; 420 ; 620) affectés à deux organes de roulement consécutifs (14 ; 214 ; 314 ; 414 ; 614) sont disposés soit tous avant, soit tous après ces organes de roulement (14 ; 214 ; 314 ; 414 ; 614).

6. Chaîne d'organes de roulement selon la revendication 5, **caractérisée en ce que** les éléments de retenue (20 ; 620) affectés à tous les organes de roulement (14 ; 614) sont disposés soit tous avant, soit tous après ces organes de roulement (14 ; 614).

7. Chaîne d'organes de roulement selon l'une des revendications 1 à 4, **caractérisée en ce que** parmi les éléments de retenue (120 ; 220 ; 320 ; 420 ; 520 ; 720) affectés à deux organes de roulement consécutifs (114 ; 214 ; 314 ; 414 ; 514), l'élément de retenue (120 ; 220 ; 320 ; 420 ; 520 ; 720) au nombre minimum d'un affecté au premier organe de roulement (114 ; 214 ; 314 ; 414 ; 514) est disposé avant cet organe de roulement (114 ; 214 ; 314 ; 414 ; 514), tandis que l'élément de retenue (120 ; 220 ; 320 ; 420 ; 520 ; 720) au nombre minimum d'un affecté à l'autre organe de roulement (114 ; 214 ; 314 ; 414 ; 514) est disposé après cet organe de roulement (114 ; 214 ; 314 ; 414 ; 514).

8. Chaîne d'organes de roulement selon la revendication 7, **caractérisée en ce que** soit tous les éléments de retenue (120 ; 420 ; 520 ; 720) affectés chaque fois à deux organes de roulement (114 ; 414 ; 514) sont disposés de manière alternée entre deux organes de roulement consécutifs (114 ; 414 ; 514) à chaque fois, soit aucun élément de retenue (120 ; 420 ; 520 ; 720) n'est disposé.

9. Chaîne d'organes de roulement selon la revendication 7 ou 8, **caractérisée en ce que** l'élément de retenue (120 ; 420 ; 520) au nombre minimum d'un affecté au premier organe de roulement (114 ; 414 ; 514) et l'élément de retenue (120 ; 420 ; 520) au nombre minimum d'un affecté à l'autre organe de roulement (114 ; 414 ; 514) sont séparés l'un de l'autre au moyen d'un élément du genre barreau (118b ; 418b ; 518b).

10. Chaîne d'organes de roulement selon la revendication 9, **caractérisée en ce qu'**au moins un élément du genre barreau (418b ; 518b) est réalisé sous forme d'élément du genre barreau double (418b; 518b), c'est-à-dire qu'il comprend deux éléments du genre barreau partiels (418c ; 518c), l'élément de retenue (420 ; 520) au nombre minimum d'un affecté au premier organe de roulement (414 ; 514) étant affecté au premier élément du genre barreau partiel (418c ; 518c) et l'élément de retenue (420 ; 520) au nombre minimum d'un affecté à l'autre organe de roulement (414 ; 514) étant affecté à l'autre élément du genre barreau partiel (418c ; 518c).

11. Chaîne d'organes de roulement selon la revendication 10, **caractérisée en ce que** les deux éléments du genre barreau partiels (418c) sont assemblés séparément l'un de l'autre avec au moins un élément du genre montant (418a).

12. Chaîne d'organes de roulement selon la revendication 10, **caractérisée en ce que** les deux éléments du genre barreau partiels (518c) sont assemblés avec au moins un élément du genre montant (518a) via une partie d'attache commune (518d).

13. Chaîne d'organes de roulement selon la revendication 12, **caractérisée en ce que** la partie d'attache (518d) se rétrécit en direction de l'élément du genre montant (518a) au nombre minimum d'un.

14. Chaîne d'organes de roulement selon l'une des revendications 1 à 13, **caractérisée en ce qu'**un élément de retenue (20 ; 120 ; 220 ; 420 ; 520) unique, qui est disposé de préférence dans une section médiane (M) de la bande porteuse (12 ; 112 ; 212 ; 412 ; 512), est affecté à chaque organe de roulement (14 ; 114 ; 214 ; 414 ; 514).

15. Chaîne d'organes de roulement selon l'une des revendications 1 à 13, **caractérisée en ce qu'**au moins deux éléments de retenue (320 ; 620 ; 720), qui sont disposés de préférence dans des section périphériques latérales (R) de la bande porteuse (312 ; 612 ; 712), sont affectés à chaque organe de roulement (314 ; 614 ; 714).

16. Chaîne d'organes de roulement selon l'une des revendications 1 à 15, **caractérisée en ce que** les organes de roulement sont maintenus, d'une part, par les éléments de retenue (620 ; 720) et, d'autre part, par la surface périphérique pour l'essentiel totale de l'évidement (616 ; 716) recevant ces organes de roulement.

17. Chaîne d'organes de roulement selon l'une des revendications 1 à 16, **caractérisée en ce que** les éléments de retenue (20 ; 120 ; 220 ; 320 ; 420 ; 520 ; 620 ; 720) présentent une surface d'appui ou de retenue (22) adaptée au contour extérieur des organes de roulement (14 ; 114 ; 214 ; 314 ; 414 ; 514).

18. Chaîne d'organes de roulement selon l'une des revendications 1 à 17, **caractérisée en ce que** la bande porteuse (12 ; 112 ; 212 ; 312 ; 412 ; 512 ; 612 ; 712) est réalisée d'une seule pièce.

19. Chaîne d'organes de roulement selon l'une des revendications 1 à 18, **caractérisée en ce que** la bande porteuse (12 ; 112 ; 212 ; 312 ; 412 ; 512 ; 612 ; 712) est fabriquée en matière plastique.

20. Chaîne d'organes de roulement selon l'une des revendications 1 à 19, **caractérisée en ce que** la bande porteuse (12 ; 112 ; 212 ; 312 ; 412 ; 512 ; 612 ; 712) est moulée par injection.

21. Chaîne d'organes de roulement selon l'une des revendications 1 à 20, **caractérisée en ce que** les organes de roulement (14 ; 114 ; 214 ; 314 ; 414 ; 514) sont des galets ou des billes.
